# EUROPÄISCHE PATENTSCHRIFT

(11) **EP 1 738 099 B1**
(45) Veröffentlichungstag und Bekanntmachung des Hinweises auf die Patenterteilung: **25.08.2010**
(21) Anmeldenummer: 05741676.0
(22) Anmeldetag: 12.04.2005
(51) Int. Cl.: F16L 37/088, F16L 17/03

(54) **STECKVERBINDUNG MIT EINEM FORMDICHTRING**
PLUG-IN CONNECTION COMPRISING A MOULDED SEALING RING
RACCORD EMMANCHE COMPRENANT UNE BAGUE D'ETANCHEITE MOULEE

(30) Priorität: 23.04.2004 DE 102004019800
(43) Veröffentlichungstag der Anmeldung: 03.01.2007
(73) Patentinhaber: Henn GmbH & Co.KG, 6850 Dornbirn (AT)
(72) Erfinder: HARTMANN, Harald, A-6850 Dornbirn (AT)
(74) Vertreter: Riebling, Peter
(86) Internationale Anmeldenummer: PCT/EP2005/003819
(87) Internationale Veröffentlichungsnummer: WO 2005/103550

(56) Entgegenhaltungen:
- DE-A1- 4 216 305
- FR-A- 2 133 173
- GB-A- 1 205 816
- GB-A- 2 144 508
- GB-A- 2 180 310
- US-A- 5 855 399

## Beschreibung

Nach dem Oberbegriff des Anspruchs 1 betrifft die Erfindung eine Steckverbindung zwischen einem Stecker und einem rastend mit dem Stecker verbindbaren Steckteil (siche FR 2133173 A).

Derartige Steckverbindungen werden beispielsweise im Kraftfahrzeugbau verwendet, um flüssigkeitsdichte Verbindungen im Kühlwasserbereich herzustellen.

Hierbei ist am Kühler ein Stutzen befestigt, der einen ringsumlaufenden, in axialer Richtung weisenden, vorderen Schenkel zur Herstellung einer Dichtverbindung mit einem Steckteil ausbildet und ferner noch Anschläge und Rastvorsprünge zur Herstellung einer Rastverbindung mit dem darauf aufzurastenden Steckteil.

Eine solche Steckverbindung ist in einer Vielzahl älterer Patentanmeldungen des gleichen Anmelders beschrieben.

Das Steckteil besteht in einer bevorzugten Ausgestaltung aus einer Außenhülse, die werkstoffeinstückig mit einer Innenhülse verbunden ist, wobei im Zwischenraum zwischen der Außen und der Innenhülse ein Schlauch eingeschoben wird, der dort dicht aufgenommen ist.

Die Erfindung ist selbstverständlich nicht auf die Ausbildung eines solchen Steckteils begrenzt. Es können beliebige Steckteile verwendet werden, bei denen auch beispielsweise der Schlauch werkstoffeinstückig mit dem Steckteil verbunden ist, wenn nur dafür gesorgt ist, dass des Steckteil dichtend mit dem Stutzen verrastet werden kann.

Eine solche Steckverbindung soll dem gemäß flüssigkeitsdicht und/oder luftdicht sein.

Zur Herstellung der Dichtwirkung sieht der Stand der Technik vor, dass im Verbindungsbereich zwischen dem Stutzen und dem Stecker ein sogenannter Formdichtring angeordnet ist.

Es ist z.B. aus der FR 2133173 A, der GB 2144508 A und der DE 4216305 A1 bekannt, einen solchen Formdichtring auch als Lippendichtung auszubilden, was bedeutet, dass an einem Basiskörper relativ großen Querschnittes ein Lippenteil federnd angesetzt ist, das sich beim Herstellen der Steckverbindung elastisch verformt und so unter Vorspannung an das gegenüberliegende Teil der Dichtverbindung anlegt.

Nachteil ist, dass das relativ dünn dimensionierte Lippenteil nur eine geringe Vorspannung beim Herstellen der Steckverbindung entfaltet, was zum Versagen der Dichtung führt wenn im Innenraum der Steckverbindung nicht Überdruck, sondern Unterdruck geführt wird.

Ein solcher Unterdruck führt dazu, dass die Lippe sich nicht mehr unter Vorspannung an der gegenüberliegenden Dichtfläche anlegt, sondern von der Dichtfläche abgehoben wird und hierdurch die Dichtung versagt.

Es ist ebenfalls z.B. aus der US 5855399 A bekannt, bei Steckverbindungen sogenannte O-Ringe einzusetzen, die sowohl den Über- als auch den Unterdruck sichern.

Derartige O-Ringe haben jedoch den Nachteil, dass sie aufgrund ihrer großen Querschnittsform hohe Steckkräfte verursachen, was bei Steckverbindungen unerwünscht ist. Ferner besteht der Nachteil, dass sich wegen ihrer großen Querschnitte auch große Bauräume im Bereich der Steckverbindung benötigen, was zu einem vergrößerten Herstellungsaufwand der Steckverbindung führt.

Es ist auch bekannt, einen Formdichtring derart zu gestalten, dass an einem Basiskörper spiegelsymmetrisch zwei daran angeformte Dichtlippen vorgesehen sind. Diese symmetrische Ausbildung hat den Nachteil, dass sie schwierig zu montieren ist, weil die Gefahr besteht, dass sich diese Anordnung während der Montage verdreht oder verkippt. Es kann dann nicht mehr sichergestellt sein, dass die symmetrischen Dichtlippen ihre Dichtfunktion erfüllen.

Der Erfindung liegt deshalb die Aufgabe zugrunde, einen Formdichtring der eingangs genanten Art so weiter zu bilden, dass er sowohl als Überdruckdichtung als auch als Unterdruckdichtung bei sehr geringen Einsteckkräften wirkt und dass er kostengünstig herzustellen und einfach zu montieren ist.

Zur Lösung der gestellten Aufgabe ist die Erfindung durch die technischen Merkmale des Anspruches 1 gekennzeichnet.

Wichtig ist, dass der Formdichtring aus einem Basiskörper relativ großen Querschnittes besteht, der in einer umlaufenden Dichtringnut in einem Teil der Steckverbindung angeordnet ist und dass sich in radialer Richtung an den Formdichtring ein axialer Schenkel des anderen Steckteils anlegt und dass ferner an dem Basiskörper ein Federschenkel relativ geringen Querschnittes werkstoffeinstückig angeformt ist, dessen vorderes freies Ende durch eine Dichtschnur größeren Querschnittes ausgebildet wird.

Mit der gegebenen technischen Lehre ergibt sich der Vorteil, dass ein asymmetrischer Formdichtring, bestehend aus einem Basiskörper relativ großen Querschnittes und einem schräg daran angeformten Federschenkel geschaffen wird, an dessen vorderen freien Ende eine Dichtschnur vergrößerten Querschnittes angeformt ist, deren Querschnitt größer ist, als der Querschnitt des Federschenkels.

Aus Vereinfachungsgründen und der einfacheren Wortwahl wegen wird in der folgenden Erfindungsbeschreibung eine Steckverbindung bestehend aus einem Steckteil und einem darin verrastbaren Stutzen beschrieben. Die Erfindung ist nicht auf eine solche Ausführungsform beschränkt, die darin besteht, dass der Stutzen in das Steckteil hinein gesteckt wird und dort mit einer Rastverbindung und ferner dem erfindungsgemäßen Formdichtring-Verbindung festgelegt wird.

Es können auch einfach die Begriffe und damit auch äquivalent die Funktionen der Steckverbindung vertauscht werden, indem man das äußere Teil als Stutzen und das innere Teil als Stecker bezeichnet.

Der einfacheren Beschreibung wegen wird jedoch im folgenden davon ausgegangen, dass das äußere Teil ein Steckteil ist und das in dem Steckteil einzusteckende, zu verrastende, sowie dichtend festzulegende Teil als Stutzen dargestellt ist.

Mit der gegebenen erfindungsgemäßen Lehre ergibt sich nun das Merkmal, dass der Basiskörper des besagten Querschnittes eine Dichtschnur ausbildet, die radial einwärts an den zugeordneten Flächen der Dichtringnut des Steckers anliegt. Durch diesen Basiskörper wird die Formstabilität des Dichtrings bestimmt, der damit verdrehungs- und verkippungssicher leicht in der umlaufenden Dichtringnut des Steckers montierbar ist.

Werkstoffeinstückig an den Basiskörper schließt sich ein radial nach innen gerichteter Federschenkel an, der möglichst labil ausgeführt ist und leicht elastisch verformbar ist. Dadurch erhält man geringe Einsteckkräfte und einen minimalen Einfluss des Setzverhaltens des Gummiwerkstoffes.

Die innere Dichtwirkung der radial nach außen gerichteten Fläche des radialen Schenkels des Stutzens wird nun durch eine Dichtschnur verkleinerten Durchmessers (im Vergleich zum Durchmesser des Basiskörpers) gebildet, die an dem freien vorderen und biegbaren Ende des Federschenkels angeformt ist. Durch diese besondere Schnurform wird zunächst druckunterstützt gedichtet. Dies bedeutet, dass aufgrund der Federvorspannung des Federschenkels sich die Dichtschnur an der radialen Außenfläche des Schenkels des Stutzens anlegt und bei entsprechendem Überdruck drückt dieser Überdruck in den Zwischenraum zwischen dem Basiskörper und der Dichtschnur und weitet beide Teile gegeneinander auf.

Hier hört jedoch die Erfindung nicht auf, denn erfindungsgemäß ist auch vorgesehen, dass diese Dichtung gegen Unterdruck abdichtet. Diese Abdichtung erfolgt dadurch, dass eine relativ große Vorspannung durch den Federschenkel auf die Dichtschnur erreicht wird, und dass bei gleichzeitiger Einwirkung von Unterdruck sich eine Aufweitung des Querschnittes der Dichtschnur ergibt.

Unter einer "Aufweitung" wird die Vergrößerung des Innendurchmessers verstanden, der dadurch geschieht, dass beim Einstecken des Stutzens in den Stecker sich der Federschenkel mit der daran angeformten Dichtschnur als einseitig biegbares Element radial auswärts verformt und hierbei ein Querschnitt vergrößerten Durchmessers der Dichtschnur zum Einsatz als Dichtkante kommt.

Der wirksame Innendurchmesser des Formdichtringes wird dem gemäß beim Einstecken der Steckverbindung vergrößert und der Dichtwulst an der Unterkante der Dichtschnur wird um ein bestimmtes Aufweitspiel in axialer Richtung und in radialer Richtung verdreht.

Durch diese Maßnahmen wirkt der erfindungsgemäße Formdichtring nicht nur als Überdruckdichtung, sondern als Unterdruckdichtung und das bei sehr geringen Einsteckkräften.

Durch das Prinzip der Anordnung eines Federschenkels kann der Dichtring große Achsversätze bei der Montage der Steckverbindung und im Betrieb ausgleichen. Die beiden Dichtungsschnüre, nämlich der Basiskörper und der am freien vorderen Ende des Federschenkels angeordnete Dichtquerschnitt legt sich innen bzw. außen dichtend an die zugeordneten Dichtflächen an und der Federschenkel bildet eine flexible Verbindung zwischen diesen beiden Dichtungsquerschnitten.

Der Dichtring kann damit aufgrund der Lippen- und Membranwirkung große Fertigungstoleranzen überbrücken und es wird ein geringer Materialeinsatz gewährleistet.

Das Material des Formdichtringes ist in weiten Grenzen wählbar. Es muss ein elastomeres Material sein, welches hohen Verformungskräften Stand hält. Ein solches elastomeres Material kann z. B. Kautschuk oder ein Polyurethan-Material sein. Ein solcher Formdichtring kann auch im Schäumverfahren hergestellt werden.

Es ist auch möglich, den Formdichtring aus einem Zwei-Komponenten-Kunststoff herzustellen, um verschiedenen Dichtquerschnitten unterschiedliche elastische Eigenschaften zuzuordnen.

Im Folgenden wird die Erfindung anhand von lediglich einen Ausführungsweg darstellenden Zeichnungen näher erläutert. Hierbei gehen aus den Zeichnungen und ihrer Beschreibung weitere bervorgügte Merkmale und Vorteile der Erfindung hervor.

Es zeigen:
- Figur 1:: Vorderansicht eines Formdichtringes nach der Erfindung;
- Figur 2:: Schnitt gemäß der Linie AA in Figur 1;
- Figur 3:: Stirnansicht des Formdichtringes nach dem Detail B in Figur 3;
- Figur 4:: ein Einbaubeispiel eines Formdichtringes in eine Steckverbindung;
- Figur 5:: eine vergrößerte Darstellung der Figur 4;
- Figur 6:: eine weiter vergrößerte Darstellung im Vergleich zur Figur 5.

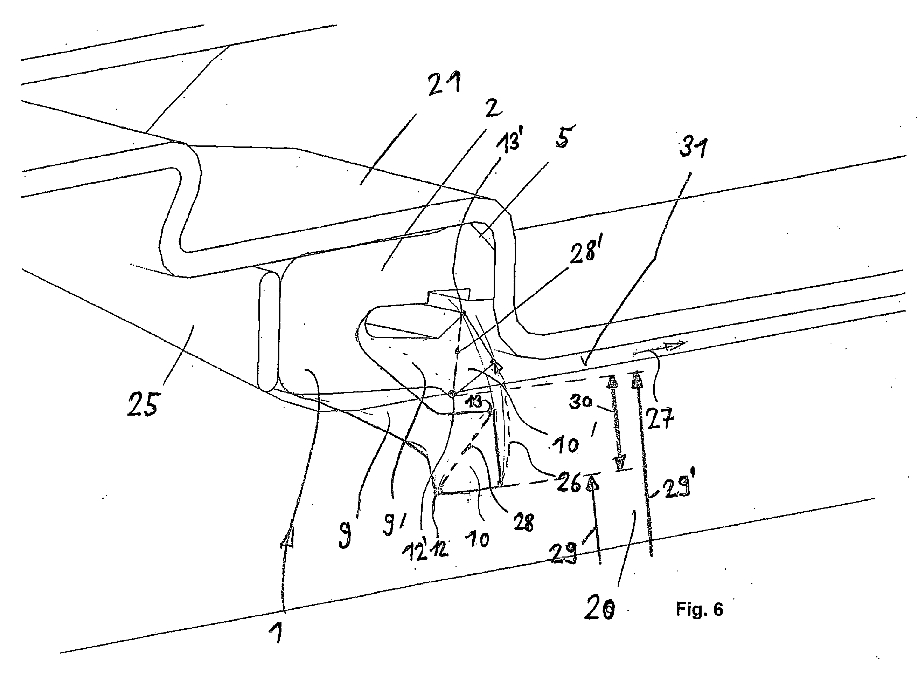

Der Formdichtring 1 nach der Erfindung besteht im Wesentlichen aus einem Rundkörper, der in seinem Innenraum einen Innendurchmesser 29 definiert. Erfindungsgemäß wird dieser Innendurchmesser 29 beim Herstellen der Steckverbindung auf einen Innendurchmesser 29' (vgl. Figur 6) aufgeweitet. Hierbei wird ein Aufweitspiel 30 überbrückt.

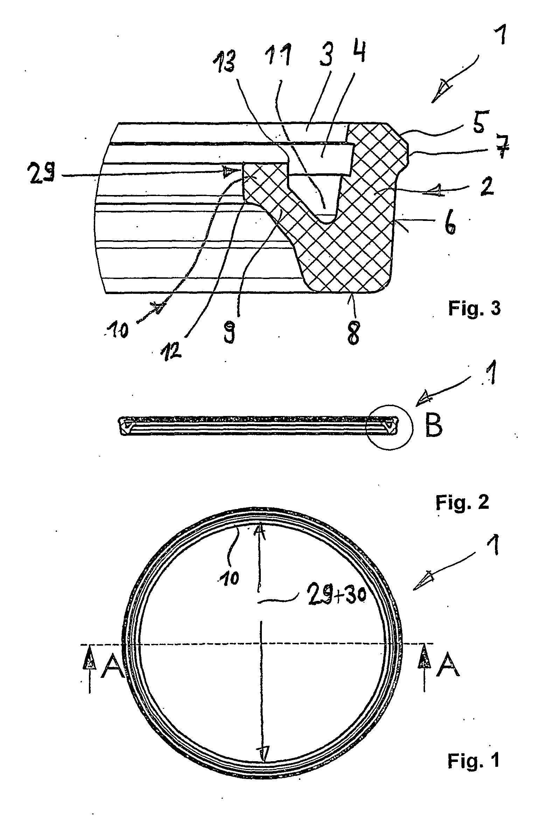

Der Formdichtring 1 nach Figur 3 besteht demgemäß aus einem im Wesentlichen rechteckförmig profilierten Basiskörper 2 relativ großen Materialquerschnittes. Aus Fertigungsgründen ist innenliegend eine erste Ringnut 3 vorgesehen, die durch einen Materialversatz von einer sich radial einwärts anschließenden zweiten Ringnut 4 abgelöst wird.

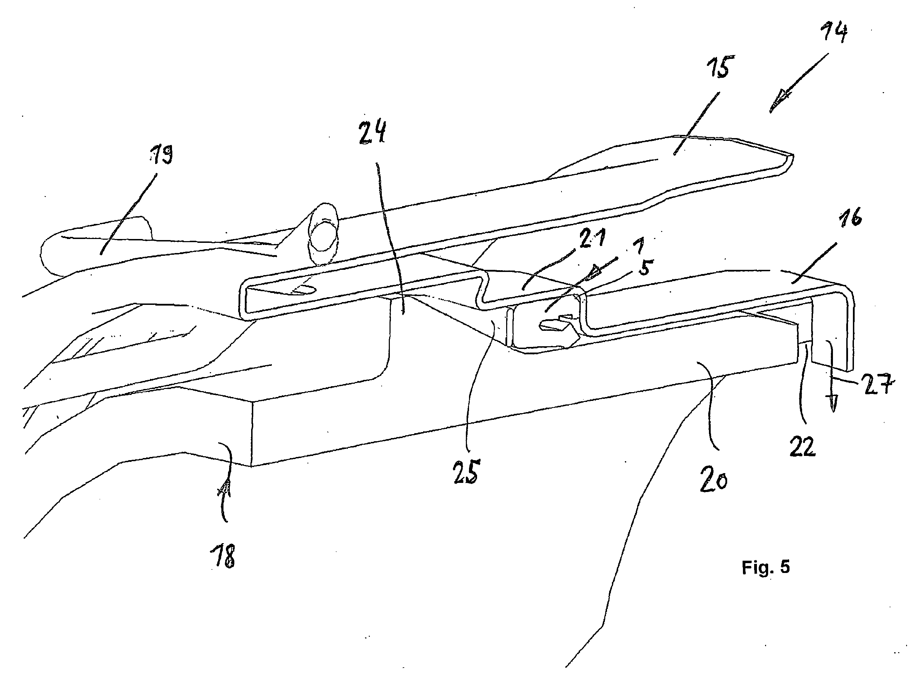

Der äußere Teil bildet eine Schräge 5, die zum Ausgleich von Fertigungstoleranzen in der Ecke der Dichtringnut 21 am Steckteil 14 (siehe Figur 5 und 6) anliegt.

Von der Schräge 5 abstehend ist ein erster radial vorstehender Dichtwulst 7 angeordnet, der an der Innenseite der Dichtringnut 21 (siehe Figur 5 und 6) abdichtend anliegt. Von dem Dichtwulst 7 zurücktretend ist eine Anlagefläche 6 vorgesehen, welche einen Abstützfläche für den Basiskörper 2 an dem Basisschenkel der Dichtringnut 21 ausbildet.

Die Anlagefläche 6 geht um 90° in eine untere Anlagefläche 8 über, und in diesem Bereich schließt sich ein Federschenkel 9 werkstoffeinstückig an das Material des Basiskörpers 2 an.

Der Querschnitt des Federschenkels 9 ist wesentlich geringer als der Querschnitt des Basiskörpers 2, so dass dieser leicht biegbar und elastomer verformbar am Basiskörper 2 angeformt ist.

Am vorderen freien Ende des Federschenkels 9 ist erfindungsgemäß eine Dichtschnur 10 vergrößerten Durchmessers angeordnet. Damit ist klargestellt, dass der Querschnitt der Dichtschnur 10 auf jeden Fall größer sein muss, als der Querschnitt des Federschenkels 9. Dies ist ein wesentlicher Vorteil gegenüber dem Stand der Technik, weil beim Stand der Technik stets nur der Federschenkel 9 nach außen verlängert war und dort eben nicht eine Dichtschnur 10 vergrößerten Durchmessers angeformt war.

Die Dichtschnur 10 ist im Wesentlichen rechteck- oder quadratförmig profiliert, wie dies in Figur 3 gut erkennbar ist. Sie bildet eine untere Dichtkante 12 aus, der diagonal gegenüberliegend eine Kante 13 ausgebildet ist.

Die Innenseite an der Dichtkante 12 definiert den Innendurchmesser 29 der Dichtschnur 10.

Die beiden Teile (Basiskörper 2 und Dichtschnur 10) bilden einen zwischen sich ausgebildeten Aufnahmeraum 11 aus.

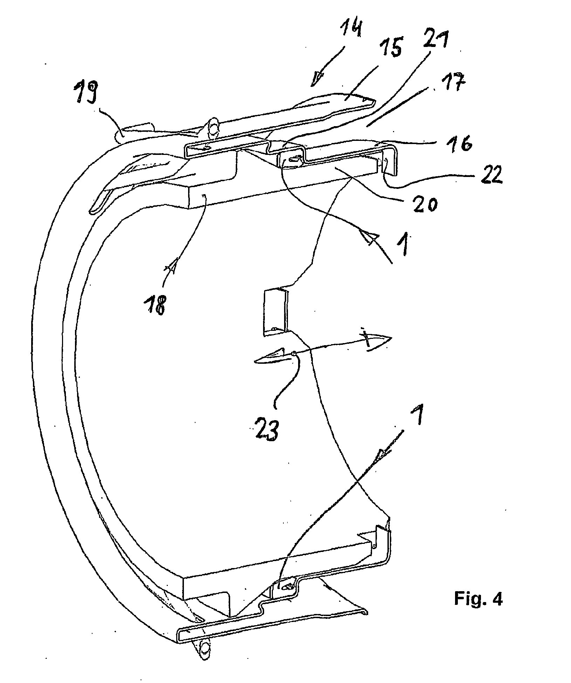

Im Einbaubeispiel nach Figuren 4 bis 6 besteht die Steckverbindung aus einem Stutzen 18, der beispielsweise aus einem Kunststoff- oder Metallmaterial hergestellt werden kann und der gemäß Figur 5 eine radial auswärts gerichtete Rastschräge 24 für eine zugeordnete Rastverbindung ausbildet. Von der Rastverbindung ist lediglich noch die Rastfeder 19 dargestellt, die an dem Steckteil 14 angeordnet ist.

Der Stutzen 18 bildet einen in axialer Richtung weisenden, umlaufenden Schenkel 20 aus, dessen obere Seite (radial nach außen gerichtete Fläche) die Dichtfläche für den erfindungsgemäßen Formdichtring 1 bildet.

Das Steckteil 14 besteht aus einer Innenhülse 16, die werkstoffeinstückig über entsprechende Abbiegungen und Bördelungen mit einer Außenhülse 15 verbunden ist.

Die beiden Teile 15, 16 bilden einen Aufnahmeraum 17, in den ein nicht näher dargestellter Schlauch eingesteckt und festgeklemmt wird.

Das Medium kann im Innenraum der Steckverbindung in beliebigen Pfeilrichtungen 23 strömen.

Liegt Überdruck im Innenraum der Steckverbindung vor, dann dringt dieser Überdruck über die Druckseite 22 in den Aufnahmeraum 11 zwischen dem Basiskörper 2 und der Dichtschnur 10 und "bläst" diesen Formdichtring 1 damit auf. Damit wird der Federschenkel 9 unter elastischer Verformung radial einwärts gepresst und der am vorderen freien Ende angeordnete verdickte Querschnitt in Form der Dichtschnur 10 legt sich mit dem Dichtwulst 12 abdichtend an der radial außenliegenden Fläche des Schenkels 20 des Stutzens 18 an. Dieses Dichtungsprinzip und der Überdruck ist an und für sich kein besonderes Problem.

Problematisch wird es dann, wenn im Bereich der Steckverbindung Unterdruck erzeugt wird und über die Druckseite 22 ein Unterdruck in Pfeilrichtung 27 entsteht. Dieser Unterdruck in Pfeilrichtung 27 (siehe Figur 5) versucht die elastische Vorspannung des Federschenkels 9 aufzuheben und den Dichtwulst 12 von der Dichtfläche des Schenkels 20 des Stutzens 18 abzuheben. Hier setzen nun die erfindungsgemäßen Maßnahmen ein.

Wie sich aus Figur 6 ergibt, weist der unverformte Federschenkel 9 vor Herstellung der Steckverbindung schräg nach unten in den Innenraum des Steckteils. Wird nun der Stutzen 18 in das Steckteil 14 eingeführt, dann kippt die Dichtschnur 10 aus der unverformten Stellung nach Figur 6 in die verformte Stellung in Pfeilrichtung 26 nach außen. Gleichzeitig wird damit der Innendurchmesser 29 in einen aufgeweiteten Innendurchmesser 29' umgesetzt, wodurch ein Aufweitspiel 30 stattfindet.

Die Diagonale 28 zwischen den beiden Kanten 12 und 13 kippt demgemäß um einen Winkel von z. B. 20° in Richtung auf die Senkrechte (radiale Normale der Dichtfläche 31 des Schenkels 20 des Stutzens 18), wodurch die Dichtkante 12' beim Herstellen der Steckverbindung axial nach vorne in Pfeilrichtung 27 und gleichzeitig radial auswärts bewegt wird.

Weil der vergrößerte Querschnitt der Dichtschnur 10 eine wesentlich höhere Vorspannung durch die Durchmesservergrößerung des Materials der Dichtschnur 10 hat, folgt dadurch, dass die verformte Dichtschnur 10 eine sehr hohe Vorspannung an der Dichtkante 12 in Richtung auf den Schenkel 20 entfaltet. Durch die Drehbewegung in Pfeilrichtung 26, bei der die Diagonale 28 verschwenkt wird, wird die Vorspannung nochmals erhöht, weil dann die Diagonale 28' etwa senkrecht zur Oberfläche der Dichtfläche 31 des Schenkels 20 steht.

Hieraus ergibt sich, dass es besonders bevorzugt wird, wenn der Querschnitt der Dichtschnur etwa quadratisch oder rechteckig ist und einen größeren Querschnitt als das Material des Federschenkels 9 aufweist.

Die Querschnittvergrößerung der Dichtschnur im Vergleich zum Querschnitt des Schenkels ist um einen Prozentsatz von etwa 50% bis 100% größer.

Es wird also im Bereich des Dichtungsquerschnittes (nämlich der Dichtkante 12) eine Materialanhäufung für die Dichtschnur 10 vorgeschlagen, wodurch eine besonders formstabile Dichtung in diesem Bereich vorgesehen wird, die aber über einen gut biegbaren Federschenkel 9 mit dem relativ starr ausgebildeten Basiskörper 2 verbunden ist.

Die Erfindung ist nicht auf die rechteckförmige oder quadratische Profilierung der Dichtschnur 10 beschränkt. Es können auch andere Querschnittsformen gewählt werden, wie z. B. ovale Querschnitte, quadratische, mehrkantige Querschnitte und dergleichen mehr. Wichtig ist nur, dass sich ein Profil ergibt, dessen Diagonale 28 dann eine hohe Materialanhäufung beschreibt und diese Diagonale etwa senkrecht zur Dichtfläche 31 des Schenkels 20 des Stutzens 18 steht.

Damit wird eine gut definierte Dichtkante 12 auf der Dichtfläche 31 gewährleistet.

Es wird noch angemerkt, dass bevorzugt die Dichtringnut 21 3-seitig geschlossen ist. Zu diesem Zweck werden zwei Seiten durch eine entsprechende Abbördelung im Bereich der Innenhülse 16 des Steckteils 14 geschaffen und eine dritte Begrenzungsseite wird durch einen Sicherungsring 25 geschaffen, der im Bereich des Steckteils angeordnet ist.

Die Erfindung ist hierauf jedoch nicht beschränkt. Es kann auch vorgesehen sein, dass statt des Sicherungsringes 25 eine weitere feste Kante der Innenhülse 16 eine U-förmig profilierte Dichtringnut 21 beschreibt.

Ebenso kann es vorgesehen sein, dass der Sicherungsring 25 nicht axial innen liegt, wie dies in Figur 6 dargestellt ist, sondern axial außen liegend, wo im gezeigten Ausführungsbeispiel nun eine feste Kante der Innenhülse 16 angeordnet ist. Die Orte der festen Kante und des Sicherungsringes können somit vertauscht werden.

Es wird bevorzugt, wenn die Dichtringnut 21 U-förmig profiliert ist und radial nach innen geöffnet ist, um so den Formdichtring 1 einzulegen.

Die Erfindung ist jedoch hierauf nicht beschränkt. Es kann auch vorgesehen werden, dass die Steckverbindung zwischen dem Steckteil 14 und dem Stutzen 18 nach außen liegend wirkt, in diesem Falle wäre die Dichtringnut 21 radial nach außen hin geöffnet und der Formdichtring 1 wird von außen her nach innen liegend in die nach außen geöffnete Dichtringnut 21 eingebracht.

### Zeichnungslegende

- 1: Formdichtring
- 2: Basiskörper
- 3: Ringnut
- 4: Ringnut
- 5: Schräge
- 6: Anlagefläche
- 7: Dichtwulst
- 8: Anlagefläche
- 9: Federschenkel
- 10: Dichtschnur
- 11: Aufnahmeraum
- 12: Dichtkante 12'
- 13: Kante
- 14: Steckteil
- 15: Außenhülse
- 16: Innenhülse
- 17: Aufnahmeraum
- 18: Stutzen
- 19: Rastfeder
- 20: Schenkel
- 21: Dichtringnut
- 22: Druckseite
- 23: Druckrichtung
- 24: Rastschräge
- 25: Sicherungsring
- 26: Pfeilrichtung
- 27: Pfeilrichtung
- 28: Diagonale 28'
- 29: Innendurchmesser 29'
- 30: Aufweitspiel
- 31: Dichtfläche

## Patentansprüche

1. Steckverbindung, beispielsweise zur Herstellung von flüssigkeits- oder gasdichten Verbindungen im Kraftfahrzeugbau, zwischen zwei Teilen, nämlich einem Stutzen (18) und einem damit verbindbaren Steckteil (14), die axial ineinander steckbar sind, wobei die Steckverbindung die zwei Teile (14, 18) und einen Formdichtring (1) aus einem elastomeren Material, beinhaltend einen Basiskörper (2) relativ großen Querschnittes, an dem radial ein elastisch radial und/oder axial federnder Federschenkel (9) kleineren Querschnittes angesetzt ist, aufweist, wobei der Basiskörper (2) in einer Dichtringnut (21) des ersten Teils (14 oder 18) aufgenommen ist und der Federschenkel (9) sich an einer radialen Dichtfläche (31) an dem anderen Teil (18 oder 14) dichtend anlegt, und wobei an dem vorderen freien Ende des Federschenkels (9) eine Dichtschnur (10) größeren Querschnittes als der Querschnitt des Federschenkels (9) ausgebildet ist, und wobei die Dichtschnur (10) eine radial innere Kante (12) ausbildet, der diagonal gegenüberliegend eine radial äußere Kante (13) ausgebildet ist, die zwischen sich eine materialanhäufende Diagonale (28) definieren, und die radial innere Kante (12) den Innendurchmesser (29, 29') der Dichtschnur (10) definiert, und wobei sich im Zusammenbauzustand der Steckverbindung, die radial innere Kante (12') der Dichtschnur (10') an der radialen Dichtfläche (31) derart anlegt, dass die materialanhäufende Diagonale (28') der Dichtschnur (10') etwa senkrecht, d.h. radial normal zur Dichtfläche (31) steht, **dadurch gekennzeichnet, dass** der Basiskörper (2) eine radiale Querschnittsschwächung vorsieht durch eine Ringnut (4) auf der der Dichtschnur (10) zugewandten Seite und auf der der Dichtschnur (10) abgewandten Seite durch einen an der Innenseite der Dichtringnut (21) anliegenden radial vorstehenden Dichtwulst (7), an den sich eine radial zurücktretende Fläche (6) anschließt, wobei sich die Ringnut (4) und der Dichtwulst (7) radial gegenüberliegen **und dass** im Zusammenbauzustand der Steckverbindung die Dichtschnur (10') der Ringnut (4) und dem Dichtwulst (7) radial gegenüberliegt.

2. Steckverbindung nach Anspruch 1, **dadurch gekennzeichnet, dass** die Dichtschnur (10) einen kleineren Querschnitt aufweist, als der Querschnitt des Basiskörpers (2).

3. Steckverbindung nach Anspruch 1 oder 2, **dadurch gekennzeichnet, dass** die Dichtschnur (10) im Querschnitt rechteckförmig, quadratisch, oder polygonal ausgebildet ist.

4. Steckverbindung nach Anspruch 1 bis 3, **dadurch gekennzeichnet, dass** der Formdichtring (1) stoffschlüssig aus einem Material ausgebildet ist oder aus einem Zwei- oder Mehr-Komponenten-Material gebildet ist.

5. Steckverbindung nach Anspruch 1 bis 4, **dadurch gekennzeichnet, dass** der Federschenkel (9) des Formdichtrings (1) schräg im Winkel zur Längsachse der Steckverbindung bzw. des Formdichtrings (1) verläuft.

6. Steckverbindung nach Anspruch 1 bis 5, **dadurch gekennzeichnet, dass** der Federschenkel (9) im Einbauzustand des Formdichtrings (1) bzw. im Zusammenbauzustand der Steckverbindung radial elastisch federnd vorgespannt ist.

7. Steckverbindung nach Anspruch 1 bis 6, **dadurch gekennzeichnet, dass** zwischen Basiskörper (2) und Federschenkel (9) mit Dichtschnur (10) ein Zwischenraum (11) ausgebildet ist.

8. Steckverbindung nach Anspruch 7, **dadurch gekennzeichnet, dass** der Zwischenraum (11) im Einbauzustand des Formdichtrings (1) bzw. im Zusammenbauzustand der Steckverbindung mit dem Über- oder Unterdruckmedium in Verbindung steht.

9. Steckverbindung nach Anspruch 1 bis 8, **dadurch gekennzeichnet, dass** der Formdichtring (1) aus Kautschuk oder aus Kunststoff, z.B. Polyurethan hergestellt ist oder diese beinhaltet.

10. Steckverbindung nach Anspruch 1 bis 9, **dadurch gekennzeichnet, dass** das Steckteil (14) und der Stutzen (18) miteinander verrastet sind, mit Hilfe einer oder mehrerer Rastfedern (19) an dem einen Teil (14 oder 18), die sich an einer Rastschräge (24) an dem anderen Teil (18 oder 14) anlegt/- en.

11. Steckverbindung nach Anspruch 1 bis 10, **dadurch gekennzeichnet, dass** der innenliegende Stutzen (18) in den Innenraum des außenliegenden Steckteils (14) eingesteckt ist und der Formdichtring (1) in der Dichtringnut (21) an der Innenseite des Steckteils (14) eingebracht ist und der Federschenkel (9) des Formdichtrings (1) radial einwärts verläuft.

## Claims

1. Plug-in connection, for example for producing liquid-tight or gas-tight connections in automotive engineering, between two parts, namely a connecting piece (18) and a plug-in part (14), which can be connected thereto, which can be axially plugged into one another, wherein the plug-in connection has the two parts (14, 18) and a moulded sealing ring (1) made of an elastomeric material, containing a base body (2) with a relatively large cross-section, to which an elastically radially and/or axially resilient spring leg (9) with a smaller cross-section is radially applied, wherein the base body (2) is received in a sealing annular groove (21) of the first part (14 or 18) and the spring leg (9) rests in a sealing manner on a radial sealing face (31) on the other part (18 or 14), and wherein a sealing lead (10) with a larger cross-section than the cross-section of the spring leg (9) is configured on the front free end of the spring leg (9) and wherein the sealing lead (10) forms a radially inner edge (12), which is diagonally opposed by a radially outer edge (13), which between them define a material-accumulating diagonal (28), and the radially inner edge (12) defines the internal diameter (29, 29') of the sealing lead (10), and wherein, when the plug-in connection is assembled, the radially inner edge (12') of the sealing lead (10') rests on the radial sealing face (31) in such a way that the material-accumulating diagonal (28') of the sealing lead (10') is approximately perpendicular, i.e. radially normal to the sealing face (31), **characterised in that** the base body (2) provides a radial cross-sectional weakening by means of an annular groove (4) on the side facing the sealing lead (10) and, on the side remote from the sealing lead (10), by means of a sealing bead (7) projecting radially and resting on the inside of the sealing ring groove (21), which sealing bead is adjoined by a radially set back face (6), the annular groove (4) and the sealing bead (7) opposing one another radially and **in that**, when the plug-in connection is assembled, the sealing lead (10') radially opposes the annular groove (4) and the sealing bead (7).

2. Plug-in connection according to claim 1, **characterised in that** the sealing lead (10) has a smaller cross-section than the cross-section of the base body (2).

3. Plug-in connection according to claim 1 or 2, **characterised in that** the sealing lead (10) is rectangular, square or polygonal in cross-section.

4. Plug-in connection according to claim 1 to 3, **characterised in that** the moulded sealing ring (1) is configured in a material-uniting manner from one material or is formed from a two-component or multi-component material.

5. Plug-in connection according to claim 1 to 4, **characterised in that** the spring leg (9) of the moulded sealing ring (1) extends obliquely at an angle to the longitudinal axis of the plug-in connection or the moulded sealing ring (1).

6. Plug-in connection according to claim 1 to 5, **characterised in that** the spring leg (9), when the moulded sealing ring (1) is installed or when the plug-in connection is assembled, is radially elastically resiliently prestressed.

7. Plug-in connection according to claim 1 to 6, **characterised in that** an intermediate space (11) is formed between the base body (2) and spring leg (9) with the sealing lead (10).

8. Plug-in connection according to claim 7, **characterised in that** the intermediate space (11), when the moulded sealing ring (1) is installed or when the plug-in connection is assembled, is connected to the excess pressure medium or negative pressure medium.

9. Plug-in connection according to claim 1 to 8, **characterised in that** the moulded sealing ring (1) is produced from rubber or plastics material, for example polyurethane, or contains them.

10. Plug-in connection according to claim 1 to 9, **characterised in that** the plug-in part (14) and the connecting piece (18) are locked together, with the aid of one or more locking springs (19) on one part (14 or 18), which rests/rest on a locking bevel (24) on the other part (18 or 14).

11. Plug-in connection according to claim 1 to 10, **characterised in that** the inner connecting piece (18) is inserted into the interior of the outer plug-in part (14) and the moulded sealing ring (1) is introduced in the sealing ring groove (21) on the inside of the plug-in part (14) and the spring leg (9) of the moulded sealing ring (1) extends radially inward.

## Revendications

1. Raccord emmanché, par exemple pour réaliser des raccordements étanches au liquide ou au gaz dans la construction automobile, entre deux éléments, à savoir une tubulure (18) et un élément d'emboîtement (14) apte à être relié à celle-ci, lesquels éléments sont aptes à être emboîtés axialement, étant précisé que le raccord emmanché comporte les deux éléments (14, 18) et une bague d'étanchéité moulée (1) en matériau élastomère qui contient un corps de base (2) de section relativement grande sur lequel est rapportée radialement une branche élastique (9) de plus petite section qui fait ressort radialement et/ou axialement, que le corps de base (2) est logé dans une rainure pour bague d'étanchéité (21) du premier élément (14 ou 18) tandis que la branche élastique (9) s'applique de manière étanche contre l'autre élément (18 ou 14) au niveau d'une surface d'étanchéité radiale (31), qu'il est prévu à l'extrémité libre avant de la branche élastique (9) un joint d'étanchéité (10) de plus grande section que ladite branche élastique (9), que le joint d'étanchéité (10) forme un bord radialement intérieur (12) à l'opposé duquel, en diagonale, est formé un bord radialement extérieur (13), les bords (12) et (13) définissant entre eux une diagonale d'accumulation de matériau (28) et le bord radialement intérieur (12) définissant le diamètre intérieur (29, 29') du joint d'étanchéité (10), et que dans la position assemblée du raccord emmanché, le bord radialement intérieur (12') du joint d'étanchéité (10') s'applique contre la surface d'étanchéité radiale (31) de telle sorte que ladite diagonale d'accumulation de matériau (28') du joint (10') soit à peu près perpendiculaire, c'est-à-dire radialement normale par rapport à la surface d'étanchéité (31), **caractérisé en ce que** le corps de base (2) prévoit un affaiblissement de section radial grâce à une rainure pour bague (4) sur le côté tourné vers le joint d'étanchéité (10), et, sur le côté opposé au joint (10), grâce à un renflement d'étanchéité (7) qui est appliqué sur le côté intérieur de la rainure pour bague d'étanchéité (21), qui dépasse radialement et auquel fait suite une surface (6) radialement en retrait, la rainure pour bague (4) et le renflement d'étanchéité (7) se faisant face radialement, et **en ce que** dans la position assemblée du raccord emmanché, le joint d'étanchéité (10') fait face radialement à la rainure pour bague (4) et au renflement d'étanchéité (7).

2. Raccord emmanché selon la revendication 1, **caractérisé en ce que** le joint d'étanchéité (10) présente une section plus petite que la section du corps de base (2).

3. Raccord emmanché selon la revendication 1 ou 2, **caractérisé en ce que** le joint d'étanchéité (10) a une section rectangulaire, carrée ou polygonale.

4. Raccord emmanché selon les revendications 1 à 3, **caractérisé en ce que** la bague d'étanchéité moulée (1) se compose d'un seul matériau ou est formée à partir d'un matériau à deux composants ou plus.

5. Raccord emmanché selon les revendications 1 à 4, **caractérisé en ce que** la branche élastique (9) de la bague d'étanchéité moulée (1) est inclinée suivant un certain angle par rapport à l'axe longitudinal du raccord emmanché ou de la bague d'étanchéité (1).

6. Raccord emmanché selon les revendications 1 à 5, **caractérisé en ce que** la branche élastique (9), dans la position montée de la bague d'étanchéité moulée (1) ou dans la position assemblée du raccord, est soumise à une contrainte élastique radiale.

7. Raccord emmanché selon les revendications 1 à 6, **caractérisé en ce qu'**un espace intermédiaire (11) est formé entre le corps de base (2) et la branche élastique (9) pourvue du joint d'étanchéité (10).

8. Raccord emmanché selon la revendication 7, **caractérisé en ce que** l'espace intermédiaire (11), dans la position montée de la bague d'étanchéité moulée (1) ou dans la position assemblée du raccord, est relié à l'agent de surpression ou de dépression.

9. Raccord emmanché selon les revendications 1 à 8, **caractérisé en ce que** la bague d'étanchéité moulée (1) est fabriquée à partir de caoutchouc ou de matière plastique, par exemple de polyuréthanne, ou contient ceux-ci.

10. Raccord emmanché selon les revendications 1 à 9, **caractérisé en ce que** l'élément d'emboîtement (14) et la tubulure (18) sont verrouillés ensemble à l'aide d'un ou plusieurs ressorts de verrouillage (19) qui sont prévus sur l'un des éléments (14 ou 18) et qui s'appliquent contre un biseau de verrouillage (24) prévu sur l'autre élément (18 ou 14).

11. Raccord emmanché selon les revendications 1 à 10, **caractérisé en ce que** la tubulure intérieure (18) est introduite à l'intérieur de l'élément d'emboîtement extérieur (14), la bague d'étanchéité moulée (1) est placée dans la rainure pour bague d'étanchéité (21) prévue sur le côté intérieur de l'élément d'emboîtement (14), et la branche élastique (9) de la bague d'étanchéité moulée (1) s'étend radialement vers l'intérieur.
